# EUROPÄISCHE PATENTSCHRIFT

(11) **EP 2 593 997 B1**
(45) Veröffentlichungstag und Bekanntmachung des Hinweises auf die Patenterteilung: **02.03.2016**
(21) Anmeldenummer: 11776066.0
(22) Anmeldetag: 03.05.2011
(51) Int. Cl.: H02G 3/06, H02G 3/22

(54) **KABELZUGENTLASTUNG UND DICHTUNGSSYSTEM**
CABLE STRAIN RELIEF AT A CABLE OUTLET
DISPOSITIF DE FIXATION D'UN CÂBLE SUR UN RACCORD DE DÉPART DE CÂBLE

(30) Priorität: 17.07.2010 DE 102010027445
(43) Veröffentlichungstag der Anmeldung: 22.05.2013
(73) Patentinhaber: Harting Electric GmbH & Co. KG, 32339 Espelkamp (DE)
(72) Erfinder: SCHLEGEL, Bernard, 32369 Rahden (DE)
(86) Internationale Anmeldenummer: PCT/DE2011/075096
(87) Internationale Veröffentlichungsnummer: WO 2012/010168

(56) Entgegenhaltungen:
- EP-A2- 2 083 492
- DE-A1- 3 018 119
- US-A- 4 169 967

## Beschreibung

Die Erfindung betrifft eine Vorrichtung zur Fixierung eines Kabels an einen Kabelabgangsstutzen, bestehend aus einer Spannhülse, einem Federelement und einem Verriegelungsring.

Derartige Vorrichtung zur Fixierung eines Kabels an einen Kabelabgangsstutzen werden benötigt, um Kabel an Kabelabgängen von Steckverbindergehäusen, Schaltschränken oder Ähnlichen verdreh- und zugsicher zu halten.

### Stand der Technik

Die DE 27 50 713 zeigt eine Kabeldurchführung mit Zugentlastung, beispielsweise für ein elektrisches Gerät. Die Zugentlastung für das anzuschließende Kabel wird durch zwei im Wesentlichen zylinderförmige Teile realisiert, die ineinander gesteckt werden und durch die das Kabel geführt ist. Die Teile besitzen jeweils ovale Durchführungen, die zunächst übereinander liegen. Bei einer Relativverdrehung der einzelnen Teile, verschieben sich die ovalen Öffnungen ebenfalls zueinander, wodurch sich die verbleibende Öffnung bis auf den Kabeldurchmesser verengt.

Die DE 31 05 316 A1 zeigt eine Kabeldurchführung mit Zugentlastung für einen Steckverbinder. Zur Kabelzugentlastung ist hier ein Klemmband vorgesehen, dass im Wesentlichen als offener Ring ausgebildet ist, der sich an den Innendurchmesser des Kabelabgangsstutzens anschmiegt. Ein am Klemmband angeformtes Wirkstück kann in radialer Richtung in den Stutzen hineingeführt werden, wodurch sich das Klemmband um den Kabelmantel verengt.

Die DE 195 26 927 A1 zeigt einen Kabelabgang. Zur Abdichtung gegen Medien ist das Kabel mit einer Dichtungstülle umspritzt, die wiederum über ein Halteblech am Kabelabgang fixiert ist.

Die DE 198 34 680 A1 schlägt zur Zugentlastung des Kabels vor, dieses mit einer den Durchmesser vergrößernden Hülse zu umschließen. Im Steckverbinerinneren wird das Kabel dann in einen konusförmigen Kabelgang geführt, dessen Durchmesser sich nach außen verringert. Dadurch kann das Kabel nicht herausgezogen werden.

Die EP 0 627 588 B1 zeigt eine Kabelverschraubung zur Sicherung eines Kabels an einem Kabelabgangsstutzen. Der Stutzen ist mit einzelnen, flexiblen Klemmzungen versehen, welche, beim Aufschrauben einer Überwurfmutter, gegen eine über den Kabelmantel geschobene Dichtung geführt werden und damit die Dichtung und gleichzeitig das Kabel einklemmen.

Beim Zusammenpressen der Klemmzungen kann es vorkommen, dass der über die Dichtung auf das Kabel ausgeübte Pressdruck nicht die erforderliche Höhe zur Dreh- und Zugsicherung des Kabels erreicht.

Die DE 3 128 541 C1 zeigt eine Kabelverschraubung, die zur Kabelzugentlastung eine Zugentlastungsschelle - mit einer Sicherung gegen unbeabsichtigtes Lösen - vorsieht. Allerdings erfordert die Kabelverschraubung hier spezielles Werkzeug.

### Aufgabenstellung

Die Aufgabe der Erfindung besteht darin, eine Kabelfixierung (Kabelzugentlastung) vorzuschlagen, die ohne spezielles Werkzeug montierbar ist und gleichzeitig eine gute Verdreh- und Zugsicherheit für das Kabel bietet.

Die Aufgabe wird erfindungsgemäß dadurch gelöst, dass das Federelement als offener Ring ausgebildet ist, dessen Enden zwischen einer Abstützkontur der Spannhülse und einer Mitnehmerkontur des Verriegelungsrings eingeklemmt sind, und das Federelement durch eine Relativbewegung des Verriegelungsrings zur Spannhülse im Durchmesser veränderbar ist.

Vorteilhafte Ausgestaltungen der Erfindung sind in den Unteransprüchen angegeben.

Ein Kabelzugentlastungs- und Dichtungssystem ist in der Regel in einem Kabelfixierungselement, beispielsweise einer Kabelverschraubung, integriert. Die Kabelfixierung besteht im wesentlichen aus den Bauteilen Spannhülse, Federelement und Verriegelungsring, die in Wirkzusammenhang mit dem Kabelzugentlastungs- und Dichtungssystem ein Kabel auf einem Kabelabgangsstutzen eines Steckverbindergehäuses fixieren. Das Kabel kann beispielsweise mehradrig sein.

Das Kabelzugentlastungs- und Dichtungssystem besteht aus einem Zugentlastungselement und einem Dichtungselement. Das Zugentlastungselement ist im wesentlichen wie eine Spiralfeder geformt und hat demnach eine helixförmige Struktur. Das Wort "helixförmig" kann im allgemeinen Sprachgebrauch auch mit dem Wort "wendelförmig" gleichgesetzt werden. Einseitig ist das Zugentlastungselement mit dem Dichtungselement verbunden. Das Zugentlastungselement bildet mit dem Dichtungselement eine funktionale Einheit, die auch als Wirkverbindung bezeichnet wird.

Das Dichtungselement ist scheibenförmig ausgebildet und mittig mit einer Öffnung versehen, dessen Durchmesser kleiner ist als der Durchmesser des anzuschließenden Kabels.

Optional kann das Dichtungselement auch mit einer so genannten Durchsteckmembran anstelle der Öffnung versehen sein.

Die Seite des Dichtungselements, die zur Kabelabgangsrichtung gerichtet ist (die Außenseite), ist randseitig mit konzentrisch umlaufenden Lammellen, so genannten Presslamellen versehen. Die gegenüberliegende Seite (die Innenseite) des Dichtungselements weist ebenfalls Lamellen, so genannte Dichtlamellen, auf, die die Öffnung für das anzuschließende Kabel umschließen. Die Dichtlamellen verlaufen konzentrisch um die Öffnung des Dichtungselements, die für das Kabel vorgesehen ist. Das Kabel wird bei der Montage durch das Zugentlastungselement und durch die Öffnungen des Dichtungselements und der Spannhülse geschoben.

Oft wird das Dichtungselement aus Material mit Elastomereigenschaften (wie beispielsweise EPDM, NBR, PU, etc.) gefertigt. In diesem Fall sind die Lamellen beim Herstellungsverfahren bereits eingeformt. Die innenseitigen Dichtlamellen sorgen für eine verbesserte Dichtfunktion zwischen Dichtungselement und Kabelmantel. Die außenseitigen Presslamellen des Dichtungselements erhöhen die Dichtwirkung zwischen der Spannhülse und dem Kabelabgangsstutzen.

Der Verriegelungsring umschließt gleichzeitig die Spannhülse und den Kabelabgangsstutzen. Sowohl an der Spannhülse als auch am Verriegelungsring ist innenseitig eine Kontur angeformt, zwischen denen ein offenes, ringförmiges Federelement eingelegt ist.

Der Verriegelungsring ist drehbar um den Kabelabgangsstutzen und der Spannhülse gelagert. Bei Drehung des Verriegelungsrings, also bei einer Relativbewegung des Verriegelungsrings zur Spannhülse, verändert sich der relative Abstand der oben genannten Konturen zueinander. Da das Federelement zwischen diesen Konturen eingespannt ist, verändert sich dabei auch der Durchmesser des Federelements.

Die Drehrichtung des Verriegelungsrings, bei der der Durchmesser des Federelements größer wird, wird Öffnungsrichtung genannt. In der Endposition (auch Anschlagposition genannt) dieser Drehrichtung hat das Federelement seinen maximalen Durchmesser erreicht. Bei einer gegensinnigen Drehrichtung, der so genannten Verriegelungsrichtung, wird der Durchmesser des Federelements wieder kleiner, bis der Durchmesser in einer zweiten Endposition minimal ist.

Wenn über die oben erwähnten Konturen keine Kraft auf das Federelement ausgeübt wird, befindet sich das Federelement in seiner so genannten Nullstellung.

Wie bereits oben erwähnt, wird das Kabel vor der Montage der Kabelfixierungsvorrichtung in die Öffnung der trichterförmigen Spannhülse eingebracht. Gleichzeitig wird es vom wendelförmigen Zugentlastungselement und dem daran angebundenen Dichtungselement umschlossen. Die Spannhülse wird im unteren Bereich von dem Verriegelungsring umgeben. Anschließend wird die Spannhülse auf den Kabelabgangsstutzen gesetzt, so dass der Verriegelungsring gleichermaßen den oberen Bereich des Kabelabgangsstutzens umschließt.

Wie oben bereits ausführlich geschildert, ist das Federelement zwischen der Abstützkontur der Spannhülse und der Mitnehmerkontur des Verriegelungsrings eingeklemmt.

Das Federelement ist innenseitig konisch geformt. Der Kabelabgangsstutzen enthält eine umlaufende Nut, in welche das konisch geformte Federelement eingeführt wird, während der Verriegelungsring in Verriegelungsrichtung gedreht wird. Ist die Endposition der Verriegelungsrichtung erreicht, greift die konisch geformte Innenseite des Federelements passgenau in die umlaufende Nut des Kabelabgangsstutzens ein. Dadurch wird die das Kabel umschließende Spannhülse auf dem Kabelabgangsstutzen gehalten bzw. fixiert.

In einer besonders vorteilhaften Ausführungsform greift das Federelement bereits in seiner Nullstellung in die umlaufende Nut des Kabelabgangsstutzens ein. Um die Spannhülse auf den Kabelabgangsstutzen zu fixieren, kann diese einfach auf den Kabelabgangsstutzen aufgeschoben werden. Das Federelement weicht zunächst leicht radial zurück und schnappt dann in die umlaufende Nut ein.

Eine Fläche der Abstützkontur der Spannhülse und eine Fläche der Mitnehmerkontur des Verriegelungsrings ist jeweils schräg (in einem spitzen Winkel) zu einer Fläche, die ein Radialvektor mit einem Axialvektor der Spannhülse einspannt, ausgerichtet. Dabei handelt es sich um die Flächen, die zu den jeweiligen Enden des eingeklemmten Federelements gerichtet sind. Die Enden des Federelements sind passend dazu entgegengesetzt schräg ausgerichtet. Dadurch gleiten die Enden des Federelements, beim Drehen des Verriegelungsrings in Öffnungsrichtung, radial nach außen weg. Beim gegensinnigen Drehen in Verriegelungsrichtung, werden die Enden des Federelements hingegen radial nach innen geführt. So wird gewährleistet, dass sich der Durchmesser des Federelements gleichmäßig verändert. Die Ringform bleibt stets erhalten.

Bei Draufsicht auf die Spannhülse bildet die Abstützkontur ein im wesentlichen rechtwinkliges Dreieck, dessen Hypotenuse die oben erwähnte Schräge zur radialen Führung des Federelements bei Drehung des Spannrings bildet. Gleiches gilt für die Geometrie der Mitnehmerkontur des Verriegelungsrings.

Die Spannhülse umfasst längliche Stege, die innerhalb einer Ebene liegend radial nach außen gerichtet sind. Diese Stege werden beim Zusammenführen von Spannhülse und Verriegelungsring in axiale Aussparungen des Verriegelungsrings eingeführt. Diese Aussparungen werden von innenliegenden Stegen des Verriegelungsrings eingeschlossen. Die Stege der Spannhülse und des Verriegelungsrings verlaufen entgegengesetzt schräg, betrachtet in der Ebene der Steckrichtung. Bei der Relativbewegung des Verriegelungsrings zur Spannhülse, also bei der Drehbewegung des Verriegelungsrings, werden beide Stege gegeneinander gepresst, so dass die Teile (Spannhülse und Verriegelungsring) miteinander verklemmt sind. Diese Verklemmung wird auch als BajonettVerschluss bezeichnet.

Bei verklemmten Stegen ist auch die Endposition der Verriegelungsrichtung erreicht und das Federelement greift in die umlaufende Nut des Kabelabgangsstutzens ein.

Die Spannhülse umschließt zum Teil die Mantelfläche des Kabelabgangsstutzens. Im Inneren der Spannhülse ist ein umlaufender Rand angeformt. Zwischen diesem Rand und der Berandung des Kabelabgangsstutzen ist das Dichtungselement angeordnet.

Durch die Verklemmung des Verriegelungsrings mit der Spannhülse und der gleichzeitigen Fixierung der Spannhülse auf dem Kabelabgangsstutzen, wird das Dichtungselement zwischen dem oben genannten umlaufenden Rand der Spannhülse und der Berandung des Kabelabgangsstutzens eingeklemmt.

Die konische Innenform des Federelements unterstützt dabei die Klemmkraft, indem die Spannhülse leicht nach unten auf den Kabelabgangsstutzen gezogen wird.

Der innere umlaufende Rand der Spannhülse übt eine Kraft auf die Presslamellen des Dichtungselements aus. Durch die randseitig umlaufenden Presslamellen verkleinert sich die Berührfläche zwischen dem inneren, umlaufenden Rand der Spannhülse und dem Dichtungselement. So wird bei gleicher Presskraft ein höherer Druck auf die Dichtung ausgeübt.

Bei vollständig voneinander getrennten, also entklemmten Stegen, ist die Endposition der Öffnungsrichtung erreicht und das Federelement hat einen maximalen Durchmesser. Jetzt ist die Spannhülse vom Kabelabgangsstutzen entfern bar.

Abgehend vom Kabelabgangsstutzen, wird das Kabel vom Zugentlastungselement umschlossen. Das Zugentlastungselement umfasst an einem ersten Ende Konturen, welche in Ausnehmungen des Kabelabgangsstutzen einführbar sind. Dadurch wird das Zugentlastungselement an diesem Ende drehfest um seine axiale Achse fixiert.

An einem zweiten Ende umfasst das Zugentlastungselement radial nach außen weisende Rasthaken. Diese Rasthaken greifen in zugehörige Rastkonturen des Kabelabgangsstutzens ein, so dass das zweite Ende des Zugentlastungselements in einer Richtung drehfest fixierbar ist. Bei Drehung in die andere Richtung gleiten die flexiblen Rasthaken an den Rastkonturen ab.

Weiterhin weist das Zugentlastungselement an dem zweiten Ende axial nach außen weisende Mitnehmerhaken auf. Die Spannhülse umfasst innenseitig dazu passende Mitnehmerkonturen. Bei einer Relativbewegung der Spannhülse zum Zugentlastungselement in eine erste Richtung, der so genannten Spannrichtung, wird das zweite Ende des Zugentlastungselements relativ zum ersten Ende, welches im Kabelabgangsstutzen fixiert ist, bewegt bzw. verdreht.

Die Mitnehmerkonturen sind im Inneren der Spannhülse, entlang der Kabelöffnung, kreisförmig aneinandergereiht. In radialer Richtung sind die benachbarten Mitnehmerkonturen zueinander versetzt. Man könnte auch sagen, dass die Mitnehmerkonturen entlang Ihrer Erstreckungsrichtung radial nach außen laufen, gegen den Uhrzeigersinn betrachtet.

Dadurch kann die Helixstruktur des Zugentlastungselements um den Kabelmantel festgezurrt werden. Dies wird später noch detaillierter beschrieben.

Die Mitnehmerkonturen der Spannhülse sind demnach derart geformt, dass bei einer Relativbewegung der Spannhülse zum Zugentlastungselement in eine zweite Richtung, also entgegen der Spannrichtung, die Mitnehmerhaken des Zugentlastungselements an den Mitnehmerkonturen der Spannhülse entlang gleiten, ohne das eine ausreichende Kraft auf die Mitnehmerhaken ausgeübt wird, die eine relative Verdrehung der Enden des Zugentlastungselement verursachen würde. Die Mitnehmerhaken bestehen aus einem elastisch verformbaren Material und weichen gegebenenfalls leicht in radialer Richtung aus.

Wie bereits oben beschrieben, ist das Zugentlastungselement zwischen seinen beiden Enden wendel- bzw. helixförmig ausgebildet. Diese Wendelstruktur umschließt den Kabelmantel des anzuschließenden Kabels. Durch die oben beschriebene Relativbewegung der beiden Enden des Zugentlastungselements zueinander, wird die Steigung der Wendelstruktur verändert. Der Radius der Helix vergrößert oder verkleinert sich dementsprechend.

Bei kleiner werdenden Radius wird das Kabel von der Wendel- bzw. Helixform des Zugentlastungselements eingeschnürt und fixiert. Dadurch wird eine Zugentlastung für das Kabel gewährleistet.

Durch eine Hin- und Herbewegung der Spannhülse relativ zum Kabelabgangsstutzen, wird der helix- bzw. wendelförmige Teil des Zugentlastungselements um den Kabelmantel festgespannt.

In eine Drehrichtung (der Spannrichtung) der Spannhülse werden die Rasthaken des Zugentlastungselements weitergeführt und die Helixstruktur verengt sich um den Kabelmantel. In der anderen Drehrichtung gleiten die Mitnehmerhaken an den Mitnehmerkonturen der Spannhülse ab. Die Vorrichtung fungiert wie eine so genannte Ratsche.

In einer vorteilhaften Ausführungsform weist das Zugentlastungselement eine erste und eine zweite wendelförmige Struktur aufweist. Die Strukturen sind zueinander gegenläufig, d.h. die eine ist rechtsgängig und die andere linksgängig ausgebildet. Bei einer derartigen Doppelhelix ist der eingeschnürte Kabelmantel stets zentriert, d.h. entlang der axialen Achse des Zugentlastungselements ausgerichtet.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Zeichnung der Vorrichtung zur Fixierung des Kabels an einen Kabelabgangsstutzen ohne Kabelzugentlastung,
- Fig. 1a: eine perspektivische Darstellung des Verriegelungsrings,
- Fig. 1b: eine perspektivische Darstellung der Spannhülse,
- Fig. 1c: eine perspektivische Darstellung des Federelements,
- Fig. 2: eine perspektivische Darstellung des Kabelabgangsstutzens,
- Fig. 3: eine geschnittene Darstellung der Vorrichtung zur Fixierung des Kabels auf dem Kabelabgangsstutzen,
- Fig. 4: eine Explosionszeichnung der Vorrichtung zur Fixierung des Kabels an einen Kabelabgangsstutzen,
- Fig. 5: eine perspektivische Darstellung des Zugentlastungselements in Doppelhelixausführung,
- Fig. 6a: eine perspektivische Darstellung des Zugentlastungselements mit verbundenem Dichtungselement,
- Fig. 6b: eine Draufsichte auf das Dichtungselement,
- Fig. 7: eine geschnittene Darstellung der Vorrichtung zur Fixierung des Kabels an einen Kabelabgangsstutzen mit Kabelzugentlastung und
- Fig. 8: eine Explosionszeichnung der Vorrichtung zur Fixierung des Kabels an einen Kabelabgangsstutzen mit Kabelzugentlastung.

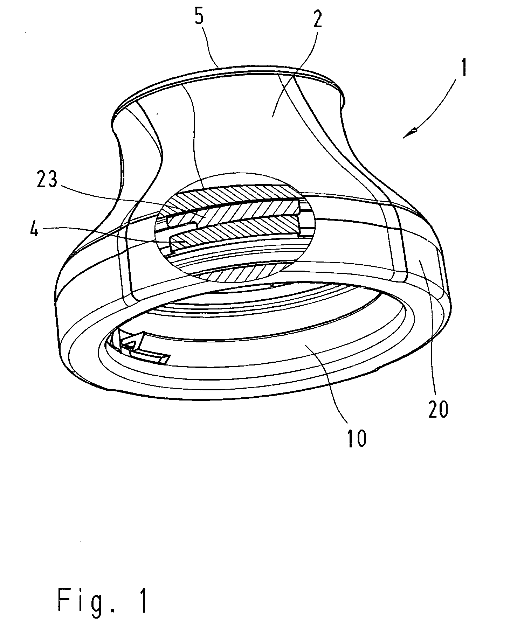

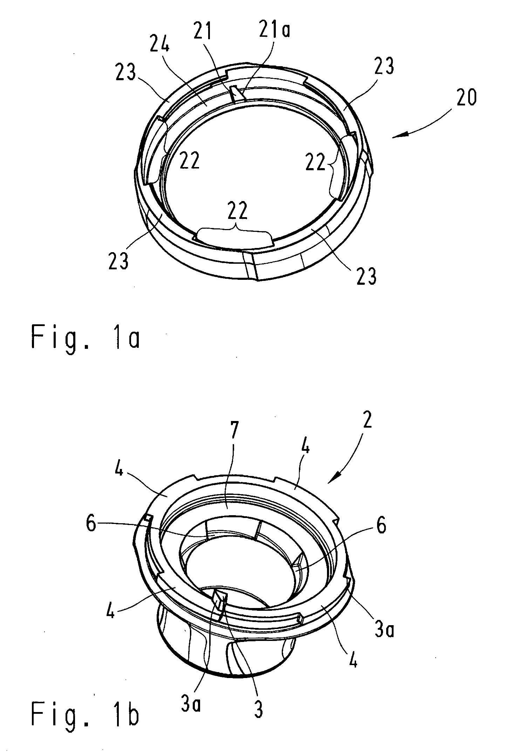

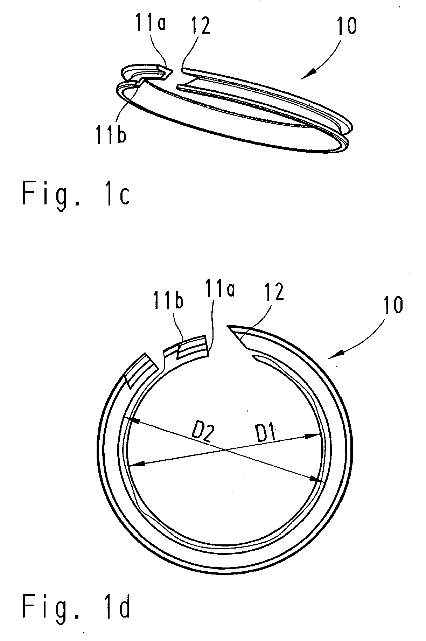

Die Figuren 1a, 1b und 1 c zeigen die einzelnen Bauteile der Vorrichtung 1 zur Fixierung einer Spannhülse 2 auf einem Kabelabgangsstutzen 30. Das Kabel wird bei dieser Darstellung aus Übersichtlichkeitsgründen nicht gezeigt.

Die Fixierung der das Kabel umschließende Spannhülse 2 auf dem Kabelabgangsstutzen, wird zunächst, unabhängig von der Fixierung des Kabels in der Spannhülse 2 selbst, beschrieben. In einem zweiten Teil der Beschreibung wird dann auf die Zugentlastung des Kabels und die Abdichtung der Kabalfixierungsvorrichtung gegen Medien wie Staub und Wasser eingegangen.

Die Spannhülse 2 (Fig. 1 b) hat eine im wesentlichen trichterförmige Form. Die Spannhülse 2 enthält eine sich nach unten verjüngende Kabelaustrittsöffnung 5. Verriegelungsseitig sind radial nach außen zeigende längliche Stege 4 angeformt. In der Nähe einer dieser Stege 4 erstreckt sich in axialer Richtung eine Abstützkontur 3. Diese hat im wesentlichen die Form eines in den Raum extrudierten Dreiecks, einer so genannten Dreieckssäule mit einer Seitenfläche 3a.

Der Verriegelungsring 20 (Fig. 1 a) ist im wesentlichen zylinderförmig gestaltet. An einem Ende wird die Öffnung durch einen radial umlaufenden Bodenring 24 verengt. Am Bodenring 24 ist eine Mitnehmerkontur 21 angeformt. Geometrisch entspricht die Form der Mitnehmerkontur 21 im wesentlichen der Form der Abstützkontur 3 der Spannhülse 2.

Am gegenüberliegenden Ende des Verriegelungsrings 20 sind längliche Stege 23 angeformt, die durch Ausnehmungen 22 voneinander getrennt sind. Die Stege 4 der Spannhülse 2 werden in die Ausnehmungen 22 des Verriegelungsrings 20 eingeführt.

Das Federelement 10 (Fig. 1 c) hat im wesentlichen die Form eines offenen Ringes, wobei das Federelement 10 innen konisch geformt ist. Ein Ende des Federelements 10 ist zweistufig 11 a, 11 b ausgebildet. Zwischen der Fläche 3a der Abstützkontur 3 der Spannhülse 2 und der Fläche 21 a Mitnehmerkontur 21 des Verriegelungsrings 20 sind die Enden 11 b, 12 des Federelements 10 gespannt.

Durch eine Relativbewegung des Verriegelungsrings 20 zur Spannhülse 2 verändert sich der Abstand der Mitnehmerkontur 21 zur Stützkontur 3. Dadurch wird das Federelement 10 aufgeweitet, so dass sich der Durchmesser D, je nach Drehrichtung des Verriegelungsringes 20, verändert. Bei Drehung des Verriegelungsrings 20 bis zur Endposition im Uhrzeigersinn (Verriegelungsrichtung) wird der Durchmesser des Federelements 10 minimal D1. Gleichzeitig schieben sich die Stege 4 und 23 übereinander und verklemmen die Spannhülse 2 mit dem Verriegelungsring 20 nach dem Bajonettprinzip. Bei gegensinniger Drehung (Öffnungsrichtung) des Verriegelungsrings 20 wird der Durchmesser des Federelements 10 maximal D2 und die Stege 4 und 23 stehen nicht mehr übereinander, so dass die Spannhülse 2 vom Verriegelungsring 20 entfernt werden kann.

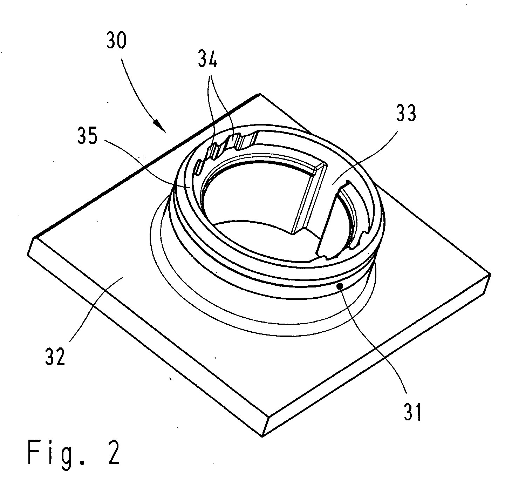

Der Kabelabgangsstutzen 30 (Fig. 2) ist im wesentlichen zylinderförmig ausgebildet und in der Regel an einem Steckverbindergehäuse (hier nicht gezeigt) angeformt. In der Mantelfläche des Kabelabgangsstutzens 30 ist eine zur Grundfläche 32 parallele, umlaufende Nut 31 eingebracht.

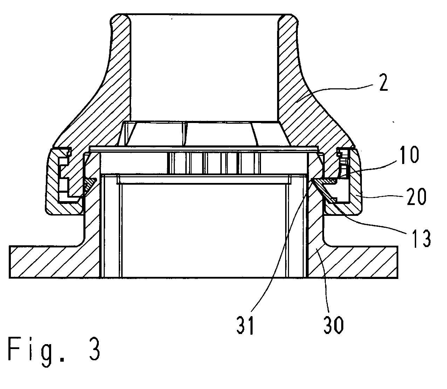

Der Verriegelungsring 20 umschließt gleichermaßen die Spannhülse 2 und den Kabelabgangsstutzen 30 (Fig. 3). Bei Drehung des Verriegelungsrings 20 in die Endposition der Verriegelungsrichtung, greift die konisch geformte Innenseite des Federelements 10 passgenau in die umlaufende Nut 31 des Kabelabgangsstutzens 30 ein. Dadurch wird die Spannhülse 2 auf dem Kabelabgangsstutzen 30 fixiert.

Die innenseitig konische Form des Federelements 10 bewirkt beim Eintritt in die umlaufende Nut 31, dass die Spannhülse 2 leicht nach unten - in Richtung des Kabelabgangsstutzens - gezogen wird. Das Federelement 10 umfasst außenseitig eine Kante 13 die zur Zentrierung des Federelements 10 im Verriegelungsring 20 dient.

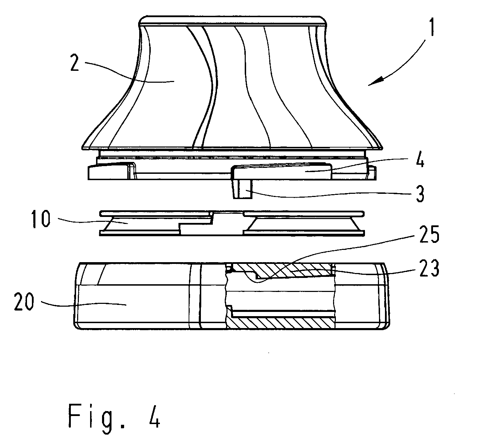

Die Figur 4 zeigt eine Explosionszeichnung der Elemente Spannhülse, Federelement und Verriegelungsring, die in oben beschriebenen Wirkzusammenhang für die Fixierung der Spannhülse auf dem Kabelabgangsstutzen geeignet sind. Der Verriegelungsring 20 ist hier in teilweise geschnittener Darstellung gezeigt. Dadurch ist die Kontur 25 erkennbar, die das Federelement 10 fixiert bzw. stützt.

Wie bereits oben angekündigt, wird jetzt auf die Zugentlastung des Kabels und die Abdichtung der Kabalfixierungsvorrichtung gegen Medien wie Staub und Wasser eingegangen.

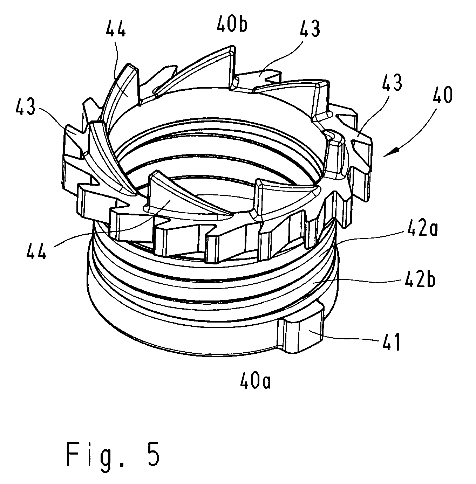

Das Zugentlastungselement 40 (Fig. 5) besteht im wesentlichen aus endseitigen Ringen, die durch eine helix- bzw. wendelförmige Struktur 42 miteinander verbunden sind. In Fig. 5 ist ein Zugentlastungselement 40 mit Doppelhelixstruktur gezeigt. Das bedeutet, es sind zwischen den Enden 40a, 40b gleichzeitig eine links- und eine rechtsgängige Struktur zu finden. Dadurch wird eine bessere Zentrierung des Kabels im Zugentlastungselement 40 erreicht.

Am ersten Ende 40a des Zugentlastungselements 40 sind radial nach außen zeigende Konturen 41 vorgesehen, die in dazu passende Ausnehmungen 33 des Kabelabgangsstutzens 30 einführbar sind. Dadurch wird das erste Ende 40a des Zugentlastungselements 40 im Kabelabgangstutzen 30 drehfest fixiert.

Am zweiten Ende 40b umfasst das Zugentlastungselement 40 radial nach außen weisende Rasthaken 43. Diese verrasten mit Rastkonturen 34 im oberen Teil des Kabelabgangsstutzens 30, so dass auch das Ende 40b drehfest fixierbar ist.

Weiterhin umfasst das Zugentlastungselement 40 am zweiten Ende 40b axial nach oben weisende Mitnehmerhaken 44, die mit Mitnehmerkonturen 6 der Spannhülse 2 zusammenwirken. Die Mitnehmerhaken 44 haben im wesentlichen die Form eines Sägezahns. Durch eine Drehung der Spannhülse (relativ zum Kabelabgangsstutzen), in Richtung der abfallenden Flanke der Mitnehmerhaken 44, wird das zweite Ende 40b des Zugentlastungselements 40 relativ zum ersten Ende 40a bewegt und die wendelförmige Struktur zwischen den Enden 40a, 40b verengt. Ein dazwischen geführtes Kabel wird eingeklemmt und so eine Zugentlastung für das Kabel realisiert.

Bei einer Drehung der Spannhülse 2 entgegen der abfallenden Flanke der Mitnehmerhaken 44, gleiten die Mitnehmerhaken 44 an den Mitnehmerkonturen 6 der Spannhülse 2 ab. Die Enden 40a, 40b werden nicht relativ zueinander bewegt.

Bei einer Hin- und Herbewegung der Spannhülse 2, kann die Helix- bzw. Wendelstruktur - wie bei einer Ratsche - um den Kabelmantel des anzuschließenden Kabels festgezurrt werden. Es wird kein weiteres Werkzeug benötigt.

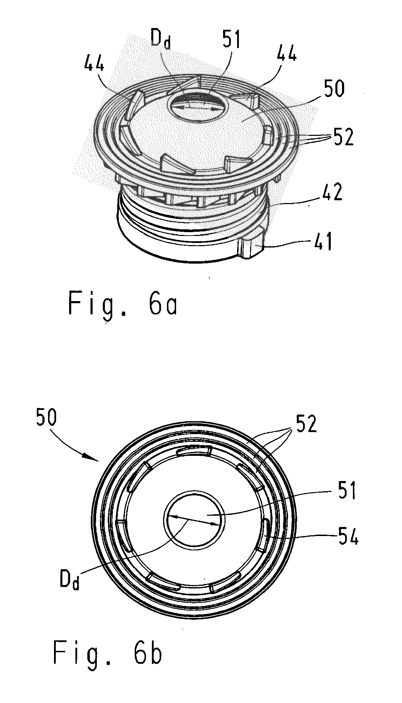

Das zweite Ende 40b des Zugentlastungselements 40 ist mit dem Dichtungselement 50 verbunden (Fig. 6a, Fig. 6b). Dabei ragen die Mitnehmerhaken 44 durch Aussparungen 54. Das anzuschließende Kabel wird durch die Öffnung 51 des Dichtungselements 50 geführt. Der Durchmesser Dd dieser Öffnung ist jeweils kleiner als der Durchmesser des anzuschließenden Kabels.

Außenseitig umfasst das Dichtungselement 50 Presslamellen 52. Diese sorgen für einen hinreichenden Anpressdruck der Dichtung auf dem Kabelabgangsstutzen 30.

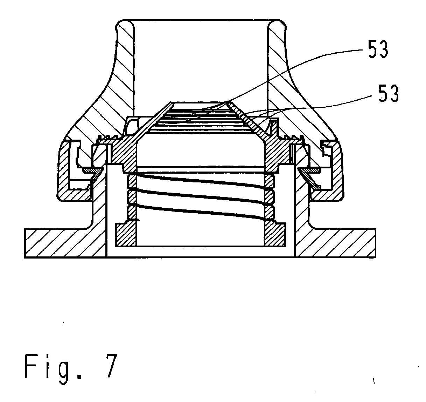

Die Spannhülse 2 umschließt zum Teil die Mantelfläche des Kabelabgangsstutzens 30. Im Inneren der Spannhülse 2 ist ein umlaufender Rand 7 angeformt. Zwischen diesem Rand 7 und der Berandung 35 des Kabelabgangsstutzen 30 ist das Dichtungselement 50 im zusammengebauten Zustand der Vorrichtung 1 angeordnet (Fig.7).

Die inneren Dichtlamellen 53 entlang der Öffnung 51, verstärken die Materialdichte des Elastomers und erhöhen dadurch die Anpresskraft (Dichtigkeit) zum Kabelmantel.

Die Figut 7 zeigt alle Bauteile der Vorrichtung zur Fixierung, Abdichtung und Zugentlastung eines anzuschließenden Kabels an einen Kabelabgangsstutzen eines Steckverbinders, Schaltschrank oder Ähnlichem in Wirkzusammenhang.

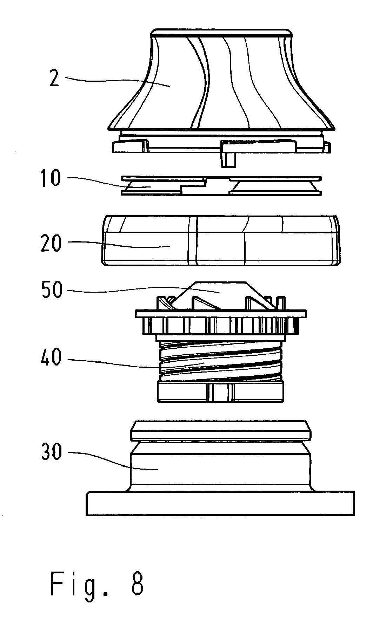

Die Figur 8 zeigt eine Explosionszeichnung der Bauteile aus Figur 7.

**Bezugszeichenliste**

| Vorrichtung zur Fixierung eines Kabels an einen Kabelabgangsstutzen | | | |
|---|---|---|---|
| **1** | **Vorrichtung zur Fixierung des Kabels** | | |
| | | | |
| **2** | **Spannhülse** | **40** | **Zugentlastungselement** |
| 3 | Abstützkontur | 41 | Kontur |
| 4 | Längliche Stege | 40a | Erstes Ende |
| 5 | Kabelöffnung | 40b | Zweites Ende |
| 6 | Mitnehmerkontur (innen) | 42 | Helix- bzw. endelförmige Struktur |
| 7 | umlaufender Rand | 42a | rechtsgängige wendelf. Struktur |
| | | 42b | linksgängige wendelf. Struktur |
| **10** | **Federelement** | 43 | Rasthaken |
| 11a, 11b | zweistufiges erstes Ende des Federelements | 44 | Mitnehmerhaken |
| 12 | zweites Ende des Federelements | **50** | **Dichtungselement** |
| 13 | Kante | 51 | Öffnung |
| D | Durchmesser | 52 | Presslamellen |
| D1 | minimaler Durchmesser | 53 | Dichtlamellen |
| D2 | maximaler Durchmesser | | |
| | | | |
| **20** | **Verriegelungsring** | | |
| 21 | Mitnehmerkontur | | |
| 22 | Ausnehmung | | |
| 23 | länglicher Steg | | |
| 24 | Bodenring | | |
| 25 | Kontur | | |
| | | | |
| **30** | **Kabelabgangsstutzen** | | |
| 31 | umlaufende Nut | | |
| 32 | Grundfläche | | |
| 33 | Ausnehmungen | | |
| 34 | Rastkonturen | | |

## Patentansprüche

1. Vorrichtung zur Fixierung eines Kabels an einen Kabelabgangsstutzen (30), bestehend aus einer Spannhülse (2), einem Federelement (10) und einem Verriegelungsring (20), wobei das Federelement (10) als offener Ring ausgebildet ist **dadurch gekennzeichnet, dass,** die Enden (11b, 12) des Federelements (10) zwischen einer Abstützkontur (3) der Spannhülse (2) und einer Mitnehmerkontur (21) des Verriegelungsrings (20) eingeklemmt sind, und das Federelement (10) durch eine Relativbewegung des Verriegelungsrings (20) zur Spannhülse (2) im Durchmesser (D) veränderbar ist.

2. Vorrichtung nach Anspruch 1
**dadurch gekennzeichnet, dass** bei einer Drehung des Verriegelungsrings (20) in seine beiden Endpositionen der Durchmesser (D) des Federelements (10) eine maximale (D2) oder eine minimale (D1) Größe einnimmt.

3. Vorrichtung nach einem der vorstehenden Ansprüche
**dadurch gekennzeichnet, dass** das ringförmige Federelement (10) innenseitig konisch geformt ist.

4. Vorrichtung nach Anspruch 3
**dadurch gekennzeichnet, dass** die konisch geformte Innenseite des Federelements (10), bei Einnahme des minimalen Durchmessers (D1), passgenau in eine umlaufende Nut (31) des Kabelabgangsstutzens (30) eingreift, so dass die Spannhülse (2) auf dem Kabelabgangsstutzen (30) unverlierbar gehalten ist.

5. Vorrichtung nach Anspruch 3
**dadurch gekennzeichnet, dass** die konisch geformte Innenseite des Federelements (10), bei Einnahme des maximalen Durchmessers (D2), aus der umlaufenden Nut (31) des Kabelabgangsstutzens (30) ausgreift, so dass die Spannhülse (2) auf dem Kabelabgangsstutzen (30) entfernbar ist.

6. Vorrichtung nach einem der vorstehenden Ansprüche
**dadurch gekennzeichnet, dass** die Fläche der Abstützkontur (3) der Spannhülse (2) und die Fläche der Mitnehmerkontur (21) des Verriegelungsrings (21), welche jeweils zu den Enden (11 b, 12) des Federelements (10) gerichtet sind, derart angeschrägt sind, **dass** die Enden (11b, 12) des Federelements (10) bei Drehung des Verriegelungsrings (20) radial nach innen oder außen führbar sind.

7. Vorrichtung nach einem der vorstehenden Ansprüche
**dadurch gekennzeichnet, dass** die Spannhülse (2) radiale Stege (4) aufweist, die axial in Aussparungen (22) des Verriegelungsrings (20) einführbar sind, wobei die Stege (4) bei der Relativbewegung des Verriegelungsrings (20) zur Spannhülse (2) mit radialen Stegen (23) des Verriegelungsrings (20) derart zusammenwirken, dass die Spannhülse (2) und der Verriegelungsring (20) miteinander verklemmt sind.

## Claims

1. Device for fixing a cable to a cable outlet connector (30), consisting of a clamping sleeve (2), a spring element (10) and a locking ring (20), the spring element (10) being formed as an open ring, **characterized in that** the ends (11b, 12) of the spring element (10) are clamped between a supporting contour (3) of the clamping sleeve (2) and a driving contour (21) of the locking ring (20), and the spring element (10) can be varied in diameter (D) by a relative movement of the locking ring (20) with respect to the clamping sleeve (2).

2. Device according to Claim 1,
**characterized in that**, when the locking ring (20) is turned into its two end positions, the diameter (D) of the spring element (10) assumes a maximum (D2) or a minimum (D1) size.

3. Device according to one of the preceding claims,
**characterized in that** the annular spring element (10) is conically-shaped on the inside.

4. Device according to Claim 3,
**characterized in that**, when the minimum diameter (D1) is assumed, the conically-shaped inner side of the spring element (10) fits exactly into a circumferential groove (31) of the cable outlet connector (30), so that the clamping sleeve (2) is held captive on the cable outlet connector (30).

5. Device according to Claim 3,
**characterized in that**, when the maximum diameter (D2) is assumed, the conically-shaped inner side of the spring element (10) disengages from the circumferential groove (31) of the cable outlet connector (30), so that the clamping sleeve (2) can be removed from the cable outlet connector (30).

6. Device according to one of the preceding claims,
**characterized in that** the surface area of the supporting contour (3) of the clamping sleeve (2) and the surface area of the driving contour (21) of the locking ring (21) that are respectively directed towards the ends (11b, 12) of the spring element (10) are bevelled in such a way that the ends (11b, 12) of the spring element (10) can be guided radially inwards or outwards when the locking ring (20) is turned.

7. Device according to one of the preceding claims,
**characterized in that** the clamping sleeve (2) has radial webs (4) that can be inserted axially into recesses (22) of the locking ring (20), wherein, during the relative movement of the locking ring (20) with respect to the clamping sleeve (2), the webs (4) interact with radial webs (23) of the locking ring (20) in such a way that the clamping sleeve (2) and the locking ring (20) are clamped together.

## Revendications

1. Dispositif de fixation d'un câble à un raccord de départ de câble (30), constitué d'une douille de serrage (2), d'un élément de ressort (10) et d'une bague de verrouillage (20), l'élément de ressort (10) étant réalisé sous forme de bague ouverte, **caractérisé en ce que** les extrémités (11b, 12) de l'élément de ressort (10) sont serrées entre un contour d'appui (3) de la douille de serrage (2) et un contour d'entraînement (21) de la bague de verrouillage (20), et le diamètre (D) de l'élément de ressort (10) peut être modifié par un déplacement relatif de la bague de verrouillage (20) par rapport à la douille de serrage (2).

2. Dispositif selon la revendication 1,
**caractérisé en ce que** dans le cas d'une rotation de la bague de verrouillage (20) dans ses deux positions d'extrémité, le diamètre (D) de l'élément de ressort (10) prend une dimension maximale (D2) ou minimale (D1).

3. Dispositif selon l'une quelconque des revendications précédentes,
**caractérisé en ce que** l'élément de ressort de forme annulaire (10) présente une forme conique du côté intérieur.

4. Dispositif selon la revendication 3,
**caractérisé en ce que** le côté intérieur de forme conique de l'élément de ressort (10), lorsque le diamètre prend sa dimension minimale (D1), vient en prise avec un ajustement précis dans une rainure périphérique (31) du raccord de départ de câble (30), de telle sorte que la douille de serrage (2) soit maintenue de manière imperdable sur le raccord de départ de câble (30).

5. Dispositif selon la revendication 3,
**caractérisé en ce que** le côté intérieur de forme conique de l'élément de ressort (10), lorsque le diamètre prend.sa dimension maximale (D2), sort de son engagement avec la rainure périphérique (31) du raccord de départ de câble (30), de telle sorte que la douille de serrage (2) puisse être enlevée du raccord de départ de câble (30).

6. Dispositif selon l'une quelconque des revendications précédentes,
**caractérisé en ce que** la surface du contour d'appui (3) de la douille de serrage (2) et la surface du contour d'entraînement (21) de la bague de verrouillage (21), qui sont orientées respectivement vers les extrémités (11b, 12) de l'élément de ressort (10), sont biseautées de telle sorte que les extrémités (11b, 12) de l'élément de ressort (10) puissent être guidées radialement vers l'intérieur ou vers l'extérieur lors de la rotation de la bague de verrouillage (20).

7. Dispositif selon l'une quelconque des revendications précédentes,
**caractérisé en ce que** la douille de serrage (2) présente des nervures radiales (4) qui peuvent être introduites axialement dans des évidements (22) de la bague de verrouillage (20), les nervures (4), lors du déplacement relatif de la bague de verrouillage (20) par rapport à la douille de serrage (2), coopérant avec des nervures radiales (23) de la bague de verrouillage (20) de telle sorte que la douille de serrage (2) et la bague de verrouillage (20) soient serrées l'une contre l'autre.
